# EUROPEAN PATENT APPLICATION

(11) **EP 2 161 965 A1**
(43) Date of publication of application: **10.03.2010**
(21) Application number: 07785274.7
(22) Date of filing: 07.08.2007
(51) Int. Cl.: H05B 1/02, H01H 37/52, A47J 27/21, H05B 3/78, F24H 9/20, F24H 1/20

(54) **OVERHEAT PROTECTOR, ELECTRIC HEATER MATCHING WITH THE OVERHEAT PROTECTOR AND CORRESPONDING LIQUID HEATER**

(30) Priority: 21.05.2007 CN 200710107550
(71) Applicant: Ningbo Goodfriends Electric Appliance Co., Ltd, Yuyao Zhejiang 315400 (CN)
(72) Inventor: ZHU, Jizhong, Zhejiang 315400 (CN)
(74) Representative: KATZAROV S.A.
(86) International application number: PCT/CN2007/002363
(87) International publication number: WO 2008/141490

(57) **Abstract**

The invention relates to a thermal sensing overheat protector for use in an electric water heater, said overheat protector fitting inside the cavity housing the shell and the lid body, said overheat protector including a bimetallic actuator that is mounted to the immersion electric heater on the end face vertically provided. Said bimetallic actuator thermally contacts with said end face. The mounting position is higher than the educed rod area of the electric heater. The thermal sensing overheat protector can find the abnormal operate state of the electric water heater more precisely, improving the security and service life of the product.

## Description

### Field of the invention

The invention relates to a thermal sensing controller, especially to a thermal sensing overheat protector used in a liquid heater in which an immersion heater is used. The invention also relates to a liquid heater using the same.

### Background of the invention

A liquid heater, especially such as an electric kettle, generally needs a control system to control the power on and off of the electrical appliance so as to control the liquid temperature. In practice, the simplest control system for controlling power on and off is a thermal sensing controller with a mechanical structure. Usually such a thermal sensing controller is attached to the electric heater in order to achieve a better thermal contact. Such a thermal sensing controller is usually an assembly of several functions, generally including a vapor type thermal sensing switch, a kick type overheat protector of restorable bimetallic material and a plastic (or metal) blown safety device. In the liquid heater using the immersion heater, the electric heater and the overheat protector of the thermal sensing controller are usually mounted on the side of the electric water heater.

In a liquid heater where the electric heater and the thermal sensing controller are mounted to the side of the heating container, a known design is to integrate the thermal sensing vapor switch, the restorable thermal sensing overheat protector and the blown safety device together, and to mount said overheat protector on the end face of the immersion heater. In general, the restorable overheat protector ensures that the liquid heater can cut off power supply when there is no water or the water has been burnt to a crisp. Such a protector is required to correctly sense dry burnt state of the electric water heater and continue to work after being found by user and such disoperation being corrected, without damaging the safety performance or reducing service life.

In general the prior art proposes a solution in which the thermal sensing actuator of the thermal sensing restorable overheat protector is provided in the region below the educed rod of the immersion electric heater. The contact end faces of the immersion electric heater and the bimetallic actuator are usually made by well heat-conducting material, such as copper. In practice, when the thermal sensing vapor switch is not available, the liquid in the liquid heater will keep boiling and evaporating, thereby liquid quantity will slowly reduce. Once the water level is below the horizontal position of the restorable thermal sensing overheat protector, the temperature of the position detected by the overheat protector will rapidly rise, thereby actuating the restorable thermal sensing overheat protector and cutting off the power supply. In such a situation, before the overheat protector is actuated, a part of the immersion electric heater has been dry burnt for a period of time. It is disadvantageous to the service life of the immersion electric heater and user safety. At the same time, in the production of the prior electric heater, due to the educe rod and the heating cord provided in the joint section of the interior heating cord of the ducted body being distributed closely, the resistance is relatively large. Before overheating protection is activated, if this section is exposed to air and dry burnt, the life and use safety of the electric heater is seriously damaged.

### Summary of the invention

An objective of the invention is to overcome the shortage of the prior art by providing a better, more reliable temperature control design avoiding electric heater burning dry and to solve the power-off protection of liquid heater in abnormal circumstance, and to make reasonable reaction of the overheating protection measure.

The invention provides a thermal sensing overheat protector used in a liquid heater, such as an electric water heater, which is mounted inside the cavity housing of the shell and the lid body, said overheat protector including a bimetallic actuator mounted to an immersion electric heater on the end face vertically provided. Said bimetallic actuator establishing thermal contact with said end face and the mounting position of said bimetallic actuator being higher than the educe rod area of the electric heater.

The mounting position of said bimetallic actuator being higher than the educe rod, said bimetallic actuator position is spaced from the educe rod. The liquid quantity in the vessel decreases slowly when the electric water heater is heated. When the water level is below the horizontal position of the restorable thermal sensing overheat protector, the local temperature detected by the overheat protector rapidly rises, actuating said bimetallic actuator, whereas the position of the educe rod of the electric heater is below the water surface.

Said overheat protector further includes a rod body passing through said lid, a movable electric connecting piece, a fixed electric connecting piece and a plug, wherein one side of said rod body contacts with said bimetallic actuator, and the other side is connected to the movable electric connecting piece, said fixed electric connecting piece being connected to the plug, the movable electric connecting piece and the fixed electric connecting piece forming a switching node in the power circuit by a movable contact and a stationary contact thereon respectively. Further, the free end of said movable electric connecting piece and a flexible detent device form a touchable connection.

The flexible detent device is a flexible piece, on one side of which an edgefold that warps angularly is provided, said edgefold grapping the movable electric connecting piece after said movable contact and stationary contact separate, the end of the flexible piece forming a touchable connection with a manual return mechanism by a touchable folding edge.

Said manual return mechanism includes a returning lever and an oblique rib connected thereon, said returning lever being touchable connected to the touchable folding edge of said flexible piece by said oblique rib in a stable position, lifting the edgefold of said flexible piece.

Said bimetallic actuator is elastically mounted. Said bimetallic actuator is ensured to retract a small dimension automatically when fixed to the end face of the electric heater and will not be pressed deformation when fixed in a tolerance range of production, and the temperature sensitivity of the bimetallic actuator is ensured as well.

The invention also provides an immersion electric heater attached to said overheat protector, including a heating element, a fixed end face vertically arranged, two educe rods and plural fixed legs, the upper portion of said end face having a boss adaptive to said bimetallic actuator on the topmost of the heating element facing said bimetallic actuator, said heating element is integrated with said boss by well heat-conducting material.

The invention also provides a liquid heater including said overheat protector and the immersion electric heater.

The invention adopts the overheat protector that is mounted on the upper end face of the electric heater to actuate the restorable thermal sensing overheat protector before the immersion electric heater is dry burnt, thereby cutting off the power circuit, which is highly favorable to the service life of the immersion electric heater and user safety.

### Brief description of the drawings

Fig. 1 is a three-dimensional constructional drawing of the thermal sensing controller of the overheat protector according to the invention;
Fig. 2 is a front view of an electric heater according to the invention;
Fig. 3 is a laterally central sectional view of the electric heater according to the invention;
Fig. 4 is a central sectional view of the electric heater with the thermal sensing controller of the overheat protector mounted, and also a schematic diagram of the member's distribution when the overheat protector is not actuated, according to the invention;
Fig. 5 is a front view of the thermal sensing controller of the overheat protector without a lid body according to the invention;
Fig. 6 is a schematic diagram (along B-B in fig. 5) of the member distribution when the overheat protector is actuated, according to the invention;
Fig. 7 is a schematic diagram (along A-A in fig. 5) of a manual return mechanism of the overheat protector, according to the invention;
Fig. 8 is a structural schematic diagram of flexible piece in the overheat protector.

### Detailed description of the invention

The explanation to the embodiments corresponding to the drawings is below.

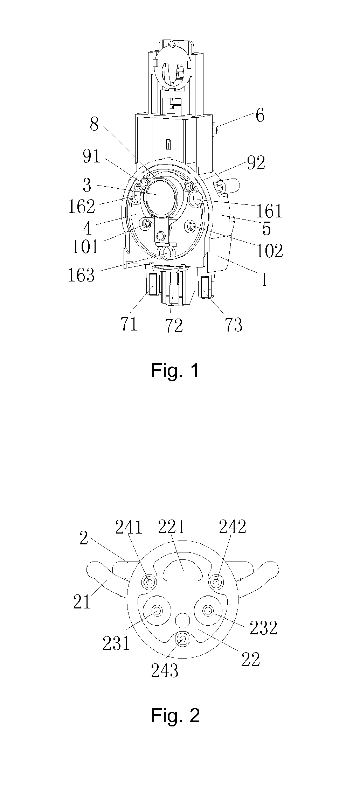

Referring to fig. 1, a overheat protector 1 includes a shell body 5, a lid body 4, a bimetallic actuator 3, a fixed sheath 8, a returning lever 6 and three power plugs 71, 72, 73 among which plug 72 is for grounding. On the lid body 4, there are two holes 101, 102 for receiving the educed rods 231, 232 of the electric heater, and three through holes 161, 162, 163 for fixing. The bimetallic actuator 3 is fixed by a hollow, annular fixed sheath 8. The bimetallic actuator 3 has a certain retracting space. The fixed sheath 8 is fixed to said lid body by two screws 91, 92. In the direction as shown in the figures, the bimetallic actuator 3 is provided above the holes 101, 102 for receiving the educed rods of the electric heater.

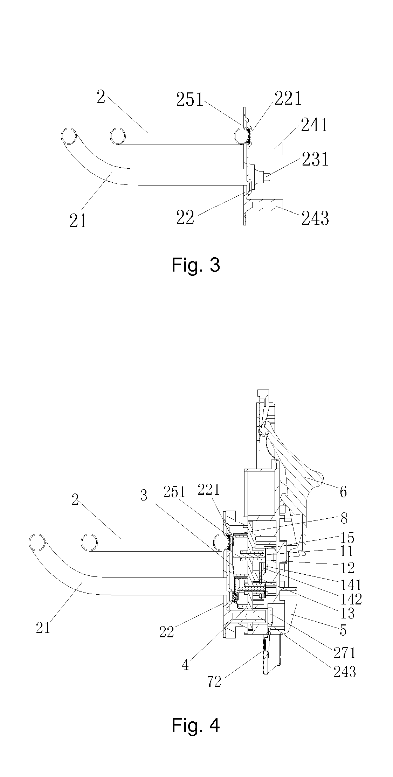

Referring to figs. 2 and 3, an electric heater 2 includes a heating element 21, a fixed end face 22 vertically provided, two educed rods 231, 232 and three fixed legs 241, 242, 243. A boss 221 adaptive to the bimetallic actuator 3 is provided on the top of the end face 22, facing one side of the bimetallic actuator, a heating element 2 and the boss 221 are connected together with material 251 having good conduction performance. In this way the heating element 2 and the boss 221 have good thermal contact. In the direction as shown in figures, the boss 221 which is adaptive to the bimetallic actuator 3 is provided above the two educed rods 231, 232.

Combining figs. 1 and 4, it can be seen that the electric heater 2 passes three through holes 161, 162, 163 of the overheat protector 1 and is fixed to the overheat protector 1 by three fixing screws 271, the other two being invisible on the figures, establishing a good thermal contact between the bimetallic actuator 3 and the boss 221 of the electric heater 2. The bimetallic actuator 3 is ready for actuation, whose curvature is adapted to the electric heater 2. The central position of the bimetallic actuator 3 contacts with one end of the rod body 11. The other end of the rod body 11 contacts with a movable electric connecting piece 12 which is elastic. An electric contactor 141 is provided on the free end of the movable electric connecting piece 12, i.e. a movable contactor. The other electric contactor 142, i.e. the stationary contactor, is provided on a fixed electric connecting piece 13. The movable electric connecting piece 12 and the fixed electric connecting piece 13 form a switching node of power supply having two electric contactors 141, 142. From the figure, it can be seen that the bimetallic actuator 3 is provided on the topmost of the heating element 21 of the electric heater 2. Since the electric heater 2 and the bimetallic actuator 3 have good thermal contact, when the water in the container is below the boss 221 of the electric heater 2, the temperature of the boss 221 will rise rapidly, actuating the bimetallic actuator 3. Since the heating element 21 in the horizontal plane of the educed rods 231, 232 of the electric heater 2 is in the water, no overheating is generated, thereby preserving the service life and use safety of the heating element 21.

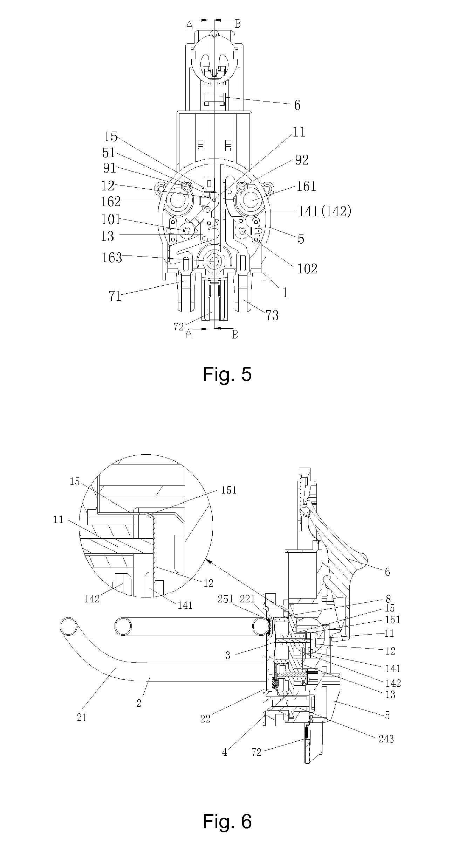

In fig. 5, the lid body and the member mounted on the lid body are cut off, to reveal the distribution of the interior members. From the figure, it can be seen that the fixed electric connecting piece 13 and the plug 71 are connected together, ready for connecting to the power source. The other end of the movable electric connecting piece 12 is provided under the hole 101, connected with an educed rod 232 of an electric heater 2 by inserting the educed rod 232 into the hole 101 as shown in the figure. The other educed rod of the electric heater 2 is connected with a distal end of the plug 73 below the other hole 102 in the middle of which there is a switching node and are connected. Thus when the two plugs 71, 73 are energized, since by this time the electric contactors 141, 142 are connected, the electric heater 2 is energized. Thus the power circuit closes the power source supply to the electric heater. A flexible piece 15 is provided on the free end of the movable electric connecting piece 12, whose free end is provided in a hole 51 of the shell body 5.

From the fig. 6, it can be seen that the actuation of the bimetallic actuator 3 is caused by abnormal heating of the electric heater 2, forcing the rod body 11 moving to the right of the drawing, one end of the rod body 11 moving the movable electric connecting piece 12 to the right of the drawing causing the electric contactor 141 thereon to disengage with the electric contactor 142 of the fixed electric connecting piece 13, thus the power circuit is disconnected. The abnormal heating stops when the power supply to the electric heater 2 is interrupted. Meanwhile, an edgefold 151 warping angularly is provided on the flexible piece 15, when the movable electric connecting piece 12 is pushed to the right of the figure, disengaging from said fixed electric connecting piece 13, said edgefold 151 can grab the free end of the movable electric connecting piece 12, the returning lever 6 provided in a eccentric mechanism is in a stable position, here when the temperature of the electric heater 2 falls because of stopping of the heating, the bimetallic actuator 3 can be restored. The movable electric connecting piece 12 will not restore to connect to the fixed electric connecting piece 13. Thereby repetitive abnormal heating is avoided.

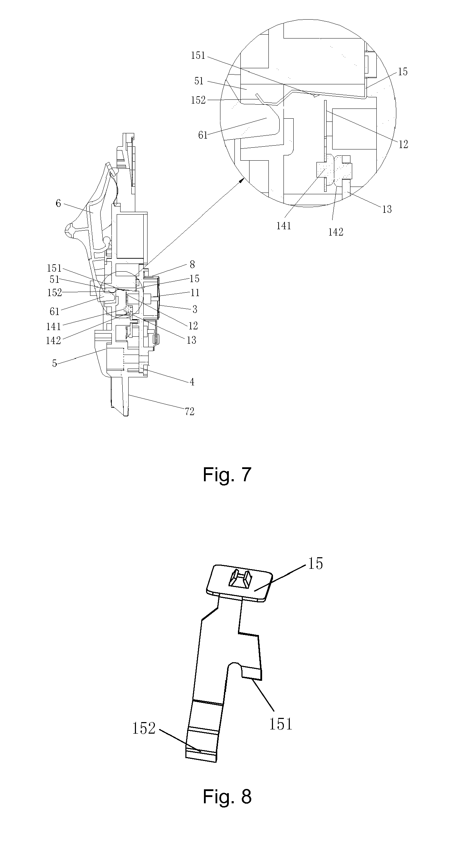

From fig. 7, it can be seen that whenever the user finds the abnormal heating of electric heater 2 the user can adopt corresponding corrective action and actuate the returning lever 6 to another stable position, a touchable folding edge 152 is provided on the flexible piece 15 in a neighborhood attaching position on the edgefold 151. An oblique rib 61 provided on the returning lever 6 shifts the touch folding edge 152 a certain distance to the upward direction in the drawing. At the same time when the edgefold 151 is attached to the touchable folding edge 152 it is shifted a certain distance as well. The free end of the movable electric connecting piece 12 that is even stuck is forced to disengage with the edgefold 151. The free end of the movable electric connecting piece 12 moves to the right side of the figure under the self elastic restoring force, forcing the electric contactor 141 on the movable electric connecting piece 12 and the electric contactor 142 on the fixed electric connecting piece 13 to contact. Thereby the power supply of the electric heater 2 is restored to the previous state for trigger. Through the foregoing embodiments, before the immersion electric heater dry burnt, the overheat protector cuts off the power supply, and then is restored to stay trigger state manually, which is advantageous to the life of the immersion electric heater and the safety of the user.

It should be noted that the above embodiments are only explanatory and not limiting to the scope of the invention. Although detailed description about the present invention has made reference to said embodiments, it should be understood by the ones skilled in the art that modifications and equivalent and improvement could be made without going beyond the spirit and scope of the invention, which is in the scope of the claims.

## Claims

1. Thermal sensing overheat protector for use in a liquid heater, said overheat protector fitted inside the cavity housing of the shell and the lid body, said overheat protector including a bimetallic actuator that is mounted to the immersion electric heater on the end face vertically provided, said bimetallic actuator establishing thermal contact with said end face, **characterized in that** the mounting position of said bimetallic actuator is higher than the educed rod area of the electric heater.

2. Overheat protector according to claim 1, further including a rod body passing said lid, a movable electric connecting piece, a fixed electric connecting piece and a plug, wherein one end of said rod body contacts with said bimetallic actuator, and the other end is connected to the movable electric connecting piece, said fixed electric connecting piece being connected to the plug, the movable electric connecting piece and the fixed electric connecting piece forming a switching node in the power circuit by a movable contactor and a stationary contactor thereon respectively, the free end of said movable electric connecting piece and a flexible detent device forming a touchable connection.

3. Overheat protector according to claim 2, **characterized in that** the flexible detent device is a flexible piece, wherein on one of its side is provided an edgefold that warps angularly, said edgefold grapping the movable electric connecting piece after said movable contactor separates from stationary contactor and the end of said flexible piece forming a touchable connection with a manually return mechanism by a touchable folding edge.

4. Overheat protector according to claim 3, **characterized in that** the return mechanism includes a returning lever and an oblique rib connected thereon, said returning lever being touchable connected to the touchable folding edge of said flexible piece by said oblique rib in stable position, lifting the edgefold of said flexible piece.

5. Overheat protector according to claim 1, **characterized in that** said bimetallic actuator is elastically mounted.

6. Immersion electric heater attached to an overheat protector according to one of claims 1 to 5, including a heating element, a fixed end face vertically arranged, two educed rods and plural fixed legs, **characterized in that** the upper of said end face having a boss suit for said bimetallic actuator on the topmost of the heating element facing said bimetallic actuator of the said overheat protector, said heating element being integrated with said boss by well heat-conducting material.

7. Liquid heater including a main body with electric circuit, **characterized in that** said main body includes a overheat protector according to one of claims 1 to 5.

8. Liquid heater according to claim 7, **characterised in that** said main body further includes an immersion heater as claimed in claim 6.
